# EUROPEAN PATENT APPLICATION

(11) **EP 2 075 154 A1**
(43) Date of publication of application: **01.07.2009**
(21) Application number: 08171956.9
(22) Date of filing: 17.12.2008
(51) Int. Cl.: B60N 2/427, B60N 2/48

(54) **Seat for vehicle**

(30) Priority: 26.12.2007 JP 2007333404
(71) Applicant: AISIN SEIKI KABUSHIKI KAISHA, Kariya-shi, Aichi-ken 448-8650 (JP)
(72) Inventor: Mori, Masatoshi, Kariya-shi Aichi 448-8650 (JP); Satoh, Takanori, Kariya-shi Aichi 448-8650 (JP); Honjo, Hideaki, Kariya-shi Aichi 448-8605 (JP)
(74) Representative: TBK-Patent

(57) **Abstract**

A seat for a vehicle includes: a seat back (1); a headrest (2); a movable member (3); a link member (53); and an operation transmitting member (55), moving the movable member (3) in an upward direction by being moved at an operation starting point (55b) thereof in accordance with the movement of the link member (53). The link member (53) includes: a pressure receiving portion (53c), moving the link member (53) when receiving a load of the occupant; and a connecting portion (56), connected to the operation transmitting member (55) so as to include a play portion relatively displaced between the connecting portion and the operation starting point (55b). The connecting portion (56) includes an operation starting position (56b) moving the movable member (3) together with the headrest (2) in the upward direction of the vehicle by moving the operation transmitting member (55) in a state where the operation starting point (55b) is engaged with the connecting portion (56), when a load more than a predetermined amount is applied.

## Description

### FIELD OF THE INVENTION

The present invention relates to a seat for a vehicle having a headrest.

### BACKGROUND

Known is a seat for a vehicle that includes a function for protecting a neck portion of an occupant when the vehicle is collided at a rear thereof, or the like. In order to carry out the function, a space between a headrest and a head portion of the occupant is eliminated by moving the headrest in an obliquely upward and forward direction of the vehicle, using a force generated when the occupant is strongly thrust to a seat back. A known seat for a vehicle is disclosed in JP2006-168410A (which will be hereinbelow referred to as reference 1). According to the seat for the vehicle in reference 1, a supporting member, which supports a headrest and which is biased in an upward direction of the vehicle by springs, is locked by means of lock mechanisms. In a case where a load of an occupant is applied on a seat back, rotational hinges are rotated in order to release the lock mechanisms. Consequently, the supporting member and the headrest are moved upward of the vehicle by means of biasing force of the springs. In a seat for a vehicle disclosed in DE10246475A1 (which will be hereinbelow referred to as reference 2), a supporting member, which is biased in an upward direction of the vehicle by means of springs, is locked by means of a lock mechanism. In a case where a predetermined amount of load is applied, cables or the like are pulled in order to release a lock of the lock mechanism. Consequently, the supporting member and the headrest are moved upward of the vehicle by means of biasing force of the springs.

In the seat for the vehicle according to reference 1, however, the lock is released only by a load applied by the occupant. A different physical size of the occupant causes a different amount of deflection of the seat back. Therefore, the lock of the lock mechanisms may be accidentally released and thereby the headrest may be accidentally moved upward. For example, in a case where loads are generated when an elbow or a knee are jabbed on the seat back, and in a case where an occupant having a large body frame sits on the seat in a rough manner, the seat back is deflected by a large amount. Accordingly, the lock may be released and thereby the headrest may malfunction.

As well as reference 1, the seat for the vehicle according to reference 2 does not prevent the headrest from malfunctioning, caused by a different physical size of the occupant.

A need thus exits for a seat for a vehicle in which the headrest is prevented from malfunctioning.

### SUMMARY OF THE INVENTION

According to an aspect of the present invention, a seat for a vehicle includes: a seat back, including a seat back frame; a headrest, provided at an upper portion of the seat back and including a headrest body and a stay; a movable member, holding the stay and supported by the seat back frame so as to move in an upward - downward direction thereof; a link member movably supported by the seat back frame; and an operation transmitting member having an operation starting point engaged with the link member, and moving the movable member in an upward direction by being moved at the operation starting point in accordance with the movement of the link member. The link member includes: a pressure receiving portion, provided at a load receiving area of the seat back and moving the link member when receiving a load of the occupant from the load receiving area; and a connecting portion, connected to the operation transmitting member so as to include a play portion relatively displaced between the connecting portion and the operation starting point. The connecting portion includes an operation starting position moving the movable member together with the headrest in the upward direction of the vehicle by moving the operation transmitting member in a state where the operation starting point of the operation transmitting member is engaged with the connecting portion, when a load more than a predetermined amount is applied.

According to the embodiment, when the occupant is seated on the seat back, the load receiving area of the seat back is deflected and the link member is pivoted. Therefore, a position of the connecting portion relative to the operation starting point of the operation transmitting member is displaced. A different physical size of the occupant causes a different amount of the deflection of the load receiving area and therefore a different distance for pivoting of the link member. Accordingly, a displacement of the connecting portion relative to the operation starting point of the operation transmitting member is differed. A difference of the amount of the deflection of the load receiving area, caused by a difference of the physical size of the occupant, is offset by means of the play portion of the connecting portion. Therefore, the headrest is prevented from malfunctioning.

Further, the connecting portion includes the operation starting position. The operation starting position moves the operation transmitting member by engaging with the operation starting point of the operation transmitting member when the load more than the predetermined amount is applied. When the occupant is thrust to the seat back at the time of a collision, or the like, the pressure receiving portion may receive the load more than the predetermined amount. In a case where the pressure receiving portion receives the load more than the predetermined amount, the link member is moved in a state where the operation starting point of the operation transmitting member is engaged with the connecting portion. Therefore, the connecting portion is moved by means of the link member. Accordingly, the movable member is moved upward. Therefore, the headrest held by the movable member is moved upward.

According to another aspect of the present invention, the connecting portion is an elongated hole extending in a substantially straight line along a moving direction of the operation transmitting member and the operation starting position is positioned at an uppermost position of the elongated hole. When the load more than the predetermined amount is applied on the pressure receiving portion, the operation starting point is positioned at a position lower than the uppermost position of the elongated hole. When the load more than the predetermined amount is applied on the pressure receiving portion, the link member moves the operation transmitting member in a downward direction in a state where the operation starting point is engaged with the uppermost position of the elongated hole.

Accordingly, the elongated hole is formed into the substantially straight line extending in the longitudinal direction of the operation transmitting member. Therefore, when the pressure receiving portion receives the load more than the predetermined amount, the operation transmitting member is surely moved in the downward direction by means of the movement of the link member. Therefore, the headrest is surely operated.

According to a further aspect of the present invention, the link member is provided at a lower portion of the seat back relative to an intermediate portion thereof in a height direction thereof.

The lower portion of the seat back is a portion lower than an intermediate portion of the seat back in a height direction thereof. A hip portion or a bottom portion of the seated occupant is positioned at the lower portion of the seat back. Compared to an upper portion of the seat back, the lower portion of the seat back receives the load of the body, such as the hip portion of the occupant, quickly at the time of the collision, or the like. Further, the lower portion of the seat back is close to the portion where the seat back is fixed at the lower arms of the seat cushion. Therefore, compared to the upper portion of the seat back, an amount of the collision energy, decreased because of swinging movement, is small. By providing the link member, which is moved when the load of the occupant is applied, at the lower portion of the seat back, the load applied by the occupant at the time of the collision is quickly and accurately received. Therefore, the headrest is surely operated at the time of the collision.

### BRIEF DESCRIPTION OF THE DRAWINGS

The foregoing and additional features and characteristics of the present invention will become more apparent from the following detailed description considered with the reference to the accompanying drawings, wherein:

Fig. 1 is an exploded perspective view illustrating a seat back including a headrest according to an embodiment;

Fig. 2 is a side view illustrating the headrest and a movable member according to the embodiment;

Fig. 3 is a side view illustrating the seat back according to the embodiment;

Fig. 4A is an explanatory view illustrating operations of a lock link member and a sliding member according to the embodiment in a state where a movement of the sliding member is restricted by means of the lock link member;

Fig. 4B is an explanatory view illustrating operations of the lock link member and the sliding member according to the embodiment in a state where the lock link member is released from the sliding member and thereby a restriction of the movement of the sliding member is released;

Fig. 5 is an exploded perspective view illustrating a link member and a fixed bracket according to the embodiment;

Fig. 6 is a cross-sectional view taken along a line VI - VI in Fig. 5;

Fig. 7 is a front view illustrating the fixed bracket pivotally supporting the link member according to the embodiment;

Fig. 8A is a view illustrating a positional relationship between an elongated hole and a second end of a cable according to the embodiment when an occupant is not seated on a seat cushion;

Fig. 8B is a view illustrating the positional relationship between the elongated hole and the second end of the cable according to the embodiment when an occupant of less than predetermined weight is seated on the seat cushion;

Fig. 8C is a view illustrating the positional relationship between the elongated hole and the second end of the cable according to the embodiment when an occupant of equal to or more than predetermined weight is seated on the seat cushion; and

Fig. 8D is a view illustrating the positional relationship between the elongated hole and the second end of the cable according to the embodiment when a vehicle is collided at a rear thereof.

### DETAILED DESCRIPTION

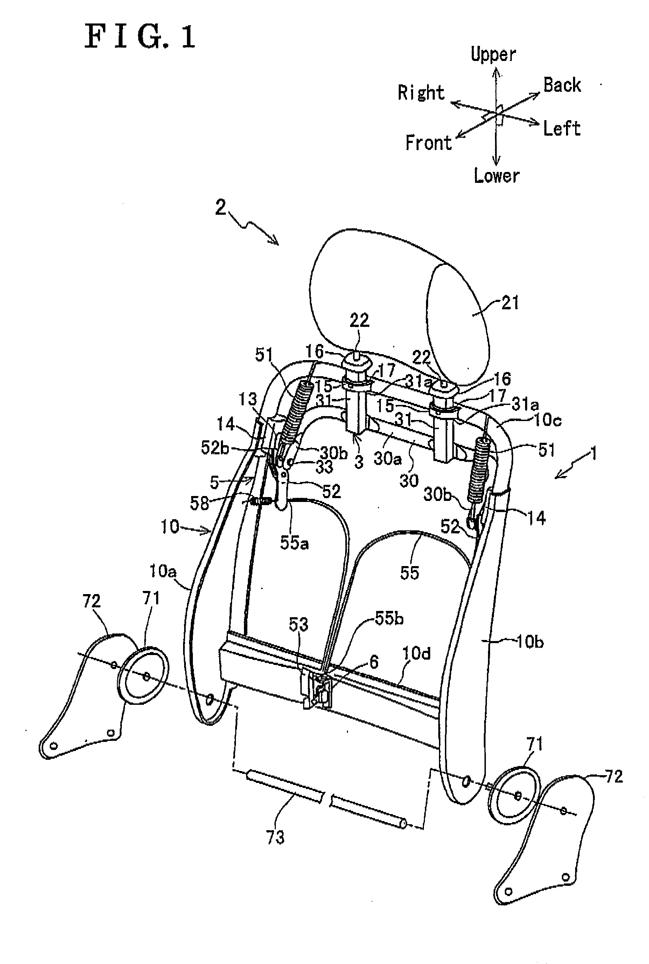

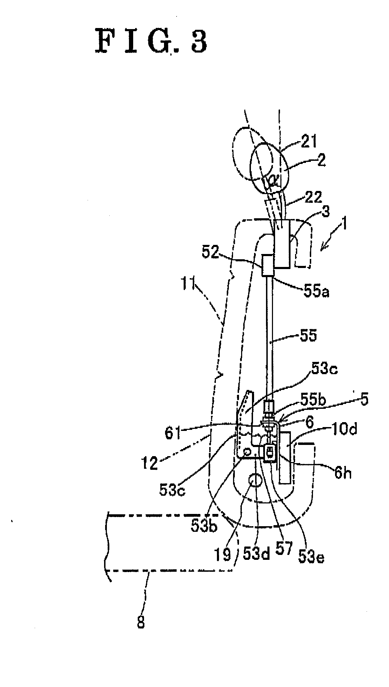

One embodiment of a seat for a vehicle will be described hereinbelow with reference to the attached drawings. Directions, such as left, right, front, back, upper, and lower in Fig. 1 correspond to directions seen by an occupant seated on the seat for the vehicle. The seat for the vehicle includes a seat back 1 including a headrest 2 and a seat cushion 8 (see Fig. 3). In Fig. 1, only a seat back frame 10 of the seat back 1 is illustrated and a spring, a cushion body 11 (see Fig. 3) and a cover member that are adapted to an actual seat back are not illustrated. The headrest 2 is provided at an upper portion of the seat back 1. The headrest 2 includes a headrest body 21 and stays 22. The headrest body 21 supports a head portion of the occupant. The stays 22 extend in a downward direction from the headrest body 21.

The seat back frame 10 includes: side frames 10a and 10b, provided at right and left sides thereof, respectively; an upper pipe 10c, provided at an upper portion thereof; and a lower panel 10d, provided at a lower portion thereof. The side frames 10a and 10b and the lower panel 10d are formed into predetermined shapes by pressing metal plates. The lower panel 10d is welded to lower portions of the side frames 10a and 10b. Both ends of the upper pipe 10c are bent and respectively welded to upper portions of side frames 10a and 10b. A reclining mechanism 71 and a lower arm 72 are provided at an outside of each of the side frames 10a and 10b. The lower arms 72 serve as a part of seat cushion frames of the seat cushion 8. A torque rod 73 is inserted into the reclining mechanisms 71 and the lower arms 72. The torque rod transmits a rotational torque of one of the reclining mechanisms 71.

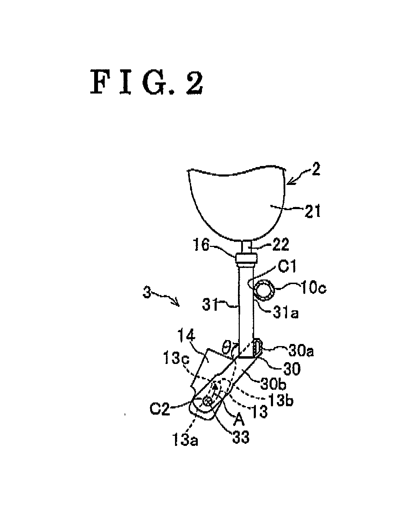

As illustrated in Figs. 1 and 2, elongated hole brackets 14 are respectively provided at both ends of the upper pipe 10c of the seat back frame 10. The elongated hole brackets 14 respectively include guiding holes 13. Each of the guiding holes 13 is formed in an oblique shape in which a first end 13a of the guiding hole 13 is positioned in a downward and forward direction relative to a second end 13b of the guiding hole 13. Each of the guiding holes 13 extends in a substantially straight line obliquely in an upward - downward direction.

The seat back frame 10 supports a movable member 3 to be movable in the upward - downward direction. The movable member 3 includes a sub flame 30, supporting brackets 31 and sliding members 33. The sub frame 30 is provided between the right and left elongated hole brackets 14. Lower portions of the supporting brackets 31 are fixed at the sub frame 30. The sliding members 33 are respectively fixed at both ends of the sub frame 30. The sub frame 30 includes a horizontal portion 30a and arm portions 30b. The horizontal portion 30a extends in a horizontal direction of the seat back 1. The arm portions 30b are respectively formed at both ends of the horizontal portion 30a. The arm portions 30b respectively extend from both ends of the horizontal portion 30a obliquely in a downward and forward direction The sliding members 33, for example sliding pins, are respectively provided at end portions of the arm portions 30b. The sliding members 33 are inserted into the corresponding guiding holes 13 of the elongated hole brackets 14. Each of the sliding members 33 is respectively engaged with the guiding hole 13 so as to move along between the first end 13a and second end 13b in the upward - downward direction (i.e. in a longitudinal direction of the guiding hole 13).

The lower portions of the supporting brackets 31 are fixed at the horizontal portion 30a of the sub frame 30. The supporting brackets 31 are formed into tubular shapes. Grommets 16 are respectively provided at upper portions of supporting brackets 31. The stays 22 of the headrest 2 are respectively inserted into holes of the grommets 16. The stays 22 are moved in the upward - downward direction relative to the corresponding supporting brackets 31. The stays 22 are respectively fixed at the supporting brackets 31 by means of lock mechanisms after the headrest body 21 is adjusted to a desired height.

Guiding brackets 15 are provided at the upper pipe 10c. Back surfaces 31a are respectively provided at intermediate portions of the supporting brackets 31 in the upward - downward direction. The back surfaces 31a are thrust towards the upper pipe 10c by means of the guiding brackets 15. Synthetic-resin made slide guiding members 17 are respectively provided at the guiding brackets 15 at portions where the guiding brackets 15 contact the corresponding supporting brackets 31. The supporting brackets 31 are slidably moved smoothly in the upward - downward direction relative to the upper pipe 10c by means of the corresponding slide guiding members 17. Each of the back surfaces 31a, provided at the intermediate portion of the supporting bracket 31 in the upward - downward direction, is tiltably supported by the guiding bracket 15 and the upper pipe 10c so as to be tilted relative to the upper pipe 10a at a predetermined angular range □ (see Fig. 3) in a front - rear direction by pivoting on a first contacting point C1.

The movable member 3, including the sub frame 30, the supporting brackets 31 and the sliding members 33, is supported so as to be movable in the upward - downward direction by means of the elongated hole brackets 14 and the guiding brackets 15. Therefore, the headrest 2 is tilted in the front - rear direction while being moved in the upward - downward direction. Positions of the first contacting points Cl, positions of second contacting points C2, lengths of the arm portions 30b of the sub frame 30 and angles □ are determined so that the headrest body 21 and the supporting brackets 31 are tilted frontward while being moved upward when the sliding members 33 are moved along the corresponding guiding holes 13 obliquely in an upward and rearward direction (i.e. in a direction illustrated by an arrow A in Fig. 2). Herein, guiding surfaces 13c are provided so as to extend along the longitudinal direction of the guiding holes 13. The second contacting points C2 are respectively provided at positions where the guiding surfaces 13c contact the corresponding sliding members 33. The angles □ are respectively formed between the arm portions 30b and the supporting brackets 31.

The movable member 3 is moved upward by an operation of a headrest driving mechanism 5. More specifically, the sliding members 33, fixed at the sub frame 30 of the movable member 3, are moved upward along the corresponding guiding holes 13 by the operation of the headrest driving mechanism 5. Consequently, the sub fame 30 is moved upward, and thereby the supporting brackets 31 and the headrest 2 are moved upward while being tilted forward.

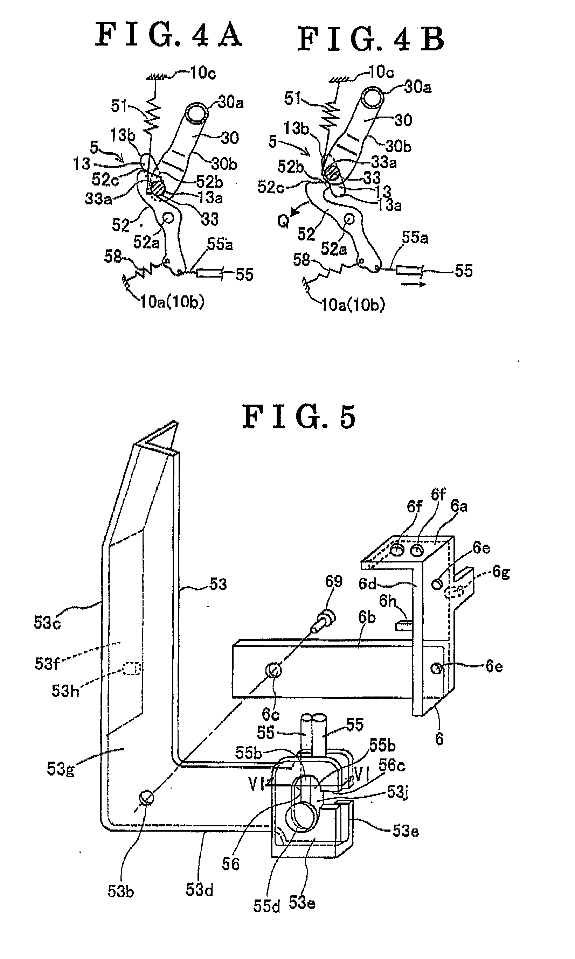

The headrest driving mechanism 5 moves the headrest 2 relative to the seat back 1 when the vehicle is collided at a rear thereof As illustrated in Figs. 1 and 4A, the headrest driving mechanism 5 includes extension springs 51, lock link members 52, a link member 53, a fixed bracket 6 and cables 55 (each of which serves as an operation transmitting member). The extension springs 51, functioning as elastic members, upwardly bias the sub frame 30, at which the headrest 2 is fixed. A movement of the headrest 2 caused by the extension springs 51 is restricted by the lock link members 52. A restriction of the movement of the headrest 2 caused by the lock link members 52 is released by the link member 53. The link member 53 is pivotally supported by the fixed bracket 6. One end of each of the cables 55 is connected to the lock link member 52. The other end of each of the cables 55 is engaged with the link member 53.

Each of the extension springs 51 is provided between the upper pipe 10c and the sub frame 30 at left or right sides. One end of each of the extension springs 51 is engaged with the upper pipe 10c and the other end thereof is engaged with the sub frame 30. The extension springs 51 bias the sub frame 30 upward relative to the upper pipe 10c.

The lock link members 52 are supported by the elongated hole brackets 14 so as to pivot around corresponding shafts 52a in the front - rear direction. Hook portions 52b are formed at upper portions of the corresponding lock link members 52. First end portions 55a of the cables 55 are respectively connected to lower back portions of the lock link members 52. Receiving portions 33 are respectively provided at the sliding members 33. The hook portions 52b are provided so as to be engageable with the corresponding receiving portions 33a from front of the receiving portions 33a and so as to be releasable from the corresponding receiving portions 33a. Ends of springs 58 are respectively fixed at the side frames 10a and 10b. The other ends of the springs 58 are respectively fixed at bottom portions of the lock link members 52. Each of the hook portions 52b is biased by means of the spring 58 in a direction where an engagement between the hook portion 52b and the receiving portion 33a is maintained, As illustrated in Fig. 4B, when each of the cables 55, connected to the lower portion of the lock link member 52, is pulled backward, the lock link member 52 is pivoted in a counter-clockwise direction (i.e. in a direction illustrated by an arrow Q in Fig. 4B) around the shaft 52b and thereby the hook portion 52b is released from the receiving portion 33a,

As illustrated in Figs. 3 and 5, the substantially L-shaped link member 53 is pivotally supported at the fixed bracket 6 by inserting a pin 69 into a pivotal hole 53b and a supporting hole 6c. The pivotal hole 53b is positioned at a corner portion of the link member 53. The supporting hole 6c is provided at an arm portion 6b of the fixed bracket 6. A portion of the link member 53 that extends to be longer than a portion provided across the pivotal hole 53b is formed into a pressure receiving portion 53c. A lower portion of the cushion body 11 of the seat back 1 provided in the vicinity of the seat cushion 8 is formed into a load receiving area 12. The pressure receiving portion 53c is provided at a back surface of the load receiving area 12. An end of the pressure receiving portion 53c is arranged so as to extend upward along the cushion body 11. The portion of the link member 53 that extends to be shorter than the portion provided across the pivotal hole 53b is formed into a connecting portion 53d. An end of the connecting portion 53d is arranged so as to be spaced away from the cushion body 11. The connecting portion 53d integrally connects accommodating walls 53e to the pressure receiving portion 53c. The accommodating walls 53e are provided at the end of the connecting portion 53d. The pressure receiving portion 53c of the link member 53 includes an opposing wall 53f and a sidewall 53g. The opposing wall 53f is opposed to the load receiving area 12. The sidewall 53g is formed by bending the opposing wall 53f. The sidewall 53g is connected to the connecting portion 53d. A returning spring 57 is provided between a first spring receiving portion 53h and a second spring receiving portion 6g. The first spring receiving portion 53h is provided at a back surface of the opposing wall 53f The second spring receiving portion 6g is provided at the fixed bracket 6. The returning spring 57 biases the link member 53 in a direction where the opposing wall 53f is moved in the vicinity of the load receiving area 12. In other words, the returning spring 57 biases the link member 53 in a direction where the link member 53 is moved in the vicinity of a back surface of the load receiving area 12 of the cushion body 11.

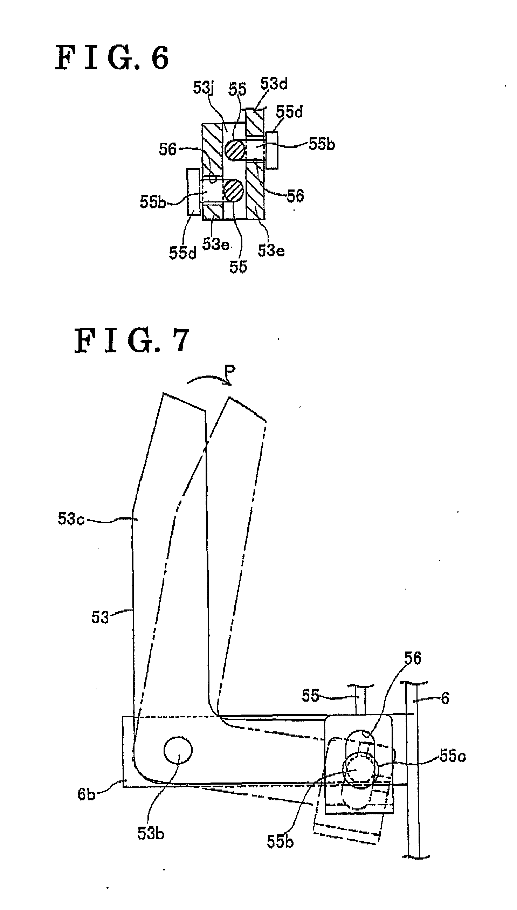

As illustrated in Figs. 5 and 6, an inner space 53j is provided between the accommodating walls 53e. The second end portions 55b of the cables 55 are accommodated in the inner space 53j. The accommodating walls 53e are connected to each other at lower portions thereof. Elongated holes 56 (each of which serves as a connecting portion) are respectively provided at the accommodating walls 53e. The elongated holes 56 extend in a substantially straight line in the upward - downward direction along a longitudinal direction of the cable 55. Installing entrances 56c are respectively provided at intermediate portions of sidewalls of the elongated holes 56 in a longitudinal direction thereof The second end portions 55b of the cables 55 are respectively installed into the elongated holes 56 through installing entrances 56c. The second end portions 55b of the cables 55 are arranged at the inner space 56j so as to be parallel to each other. The second end portions 55b of the cables 55 are bent in an opposite direction relative to each other and inserted into the corresponding elongated holes 56. The second end portions 55b of the cables 55 are respectively arranged inside the elongated holes 56 so as to have play allowances (each of which serves as a play portion) extending in the upward - downward direction, that is a moving direction of the cables 55. Enlarged diameter portions 55d are respectively provided at outsides of the accommodating walls 53e so as to be opposite from each other across the inner space 53j. The enlarged diameter portions 55d are formed by welding flange pins to distal ends of the corresponding second end portions 55b of the cables 55. Diameters of the elongated holes 56 are equal to or slightly larger than diameters of the second end portions 55b of the cables 55 and the diameters of the elongated holes 56 are smaller than diameters of the enlarged diameter portions 55d. Therefore, the second end portions 55b of the cables 55 are respectively inserted into the elongated holes and the enlarged diameter portions 55d are respectively engaged with the elongated holes 56 so as not to be released therefrom.

The fixed bracket 6 is formed into a substantially L-shape. One side of the fixed bracket 6 is formed into the arm portion 6b. The other side of the fixed bracket 6 is formed into a fixed wall 6d. The arm portion 6b includes the supporting hole 6c. The fixed wall 6d includes screw holes 6e. The fixed wall 6d is fixed at the lower panel 10d by screwing screws relative to the lower panel 10d through the screw holes 6e. A cable holding wall 6a is formed at an end of the fixed wall 6d by bending the fixed wall 6d. Cable through holes 6f are provided at the cable holding wall 6a so that the cables 55 are respectively inserted into the cable through holes 6f in the upward downward direction. A stopper 6h is provided at the fixed wall 6d of the fixed bracket 6 so as to protrude therefrom. Upper surfaces of the accommodating walls 53e contact the stopper 6h and thereby the stopper 6h holds the link member 53 at a predetermined angle against a biasing force of the returning spring 57.

The cables 55 are respectively covered by outer tubes. Both ends of each of the cables 55 are exposed. Portions of the outer tubes, provided at positions of the first end portions 55a of the cables 55, are respectively held by holding walls protruding backward from the elongated hole brackets 14. Exposed portions of cables 55, provided at the positions of the first end portions 55a of the cables 55, are respectively connected to the lock link members 52 in a state where the cables 55 are provided backward of the lock link members 52. Portions of the outer tubes, provided at positions of the second end portions of the cables 55, are respectively fixed at circumferences of the cable through holes 6f of the cable holding wall 6a by means of connecting means. Exposed portions of the cables 55, provided at the positions of the second end portions 55b of the cables 55, are respectively inserted through the cable through hole 6f and engaged with the elongated holes 56 of the link member 53. Each of the second end portions 55b of the cables 55 serves as an operation starting point at which each of the second end portions 55b of the cables 55 is operated by pivotal movement of the link member 53. The operation of the headrest driving mechanism 5 is started by the operation of the second end portions 55b of the cables 55 in accordance with the pivotal movement of the link member 53. The operation is transmitted to each of the lock link member 52 at which the first end portion 55a of the cable 55 is connected.

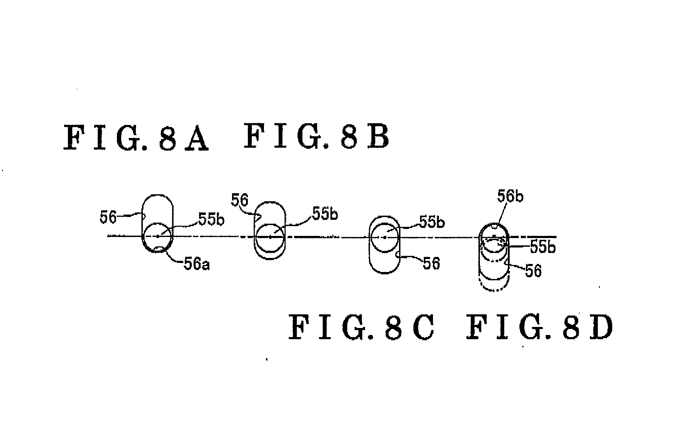

An operation of the seat for the vehicle according to the embodiment will be described hereinbelow. Structures and functions of left and right sides of the movable member 3 are substantially the same. Therefore, only one of the left and right sides of the movable member 3 will be described hereinbelow. Further, structures and functions of left and right sides of the headrest driving mechanism 5 are substantially the same. Therefore, only one of the left and right sides of the headrest driving mechanism 5 will be described hereinbelow. When an occupant is not seated on the seat cushion 8 of the seat for the vehicle, a load is not applied on the load receiving area 12 of the seat back 1. The load is not applied on the pressure receiving portion 53c of the link member 53. Therefore, the pressure receiving portion 53c of the link member 53 is biased in a direction where the pressure receiving portion 53c is moved in the vicinity of a back surface of the cushion body 11 of the seat back 1 by means of the returning spring 57. The accommodating walls 53e are thrust to the stopper 6h of the fixed bracket 6 by means of the returning spring 57. Accordingly, the link member 53 is prevented from being pivoted and is held at the seat back frame 10 at the predetermined angle. As illustrated by a solid line in Fig. 7 and as illustrated in Fig. 8A, the second end portion 55b of the cable 55 is positioned at a lowermost end 56a of the elongated hole 56 of the link member 53. Because the cable 55 is not pulled in the downward direction, the sliding member 33 is locked by means of the lock link member 52. Accordingly, the headrest body 21 is held at a position illustrated by a solid line in Fig. 3.

When an occupant of less than a predetermined weight is seated on the seat cushion 8, the cushion body 11 of the seat back 1 is slightly deflected backward. As illustrated in Fig. 7 the pressure receiving portion 53c of the link member 53 receives a load and is pivoted further in a clockwise direction (i.e. in a direction illustrated by an arrow P in Fig. 7) relative to an unseated state. Accordingly, as illustrated in Fig. 8B, the elongated hole 56 is moved in the downward direction relative to the second end portion 55b of the cable 55. Therefore, the second end portion 55b of the cable 55 is displaced to a position more upward relative to the lower most end 56a of the elongated hole 56. A position of the second end portion 55b of the cable 55 relative to the fixed bracket 6 is the same as a position of the second end portion 55b relative to the fixed bracket 6 in the unseated state. Therefore, a tension is not applied on the second end portion 55b of the cable 55. Accordingly the lock of the lock link member 53 is not released.

When an occupant of equal to or more than the predetermined weight is seated on the seat cushion 8, the cushion body 11 of the seat back 1 is deflected further backward. As illustrated in Fig. 7 the pressure receiving portion 53c of the link member 53 receives a load larger than the load applied when the occupant of less than the predetermined weight is seated. Therefore, the pressure receiving portion 53c of the link member 53 is pivoted further in the clockwise direction (i.e. in a direction illustrated by the arrow P in Fig. 7) relative to a state where the occupant of less than the predetermined weight is seated. Accordingly, as illustrated in Fig. 8C, the elongated hole 56 is moved further in the downward direction relative to the second end portion 55b of the cable 55. Therefore, the second end portion 55b of the cable 55 is displaced to a position more upward relative to the position where the light occupant is seated. A position of the second end portion 55b of the cable 55 relative to the fixed bracket 6 is the same as the position of the second end portion 55b relative to the fixed bracket 6 in the unseated state. The tension is not applied on the second end portion 55b of the cable 55. Accordingly the lock of the lock link member 53 is not released.

When the vehicle is collided at the rear thereof and a collision load is applied on a back side of the vehicle, the collision load is greatly larger than the load applied when the occupant of equal to or more than the predetermined weight is seated. The cushion body 11 of the seat back 1 is deflected backward rapidly and greatly. As illustrated by a double dashed-line in Fig. 7, the link member 53 is pivoted further in the clockwise direction relative to a state where the occupant of equal to or more than predetermined weight is seated. Accordingly, as illustrated in Fig. 8D, the elongated hole 56 is moved further in the downward direction relative to the second end portion 55b of the cable 55. Therefore, the second end portion 55b of the cable 55 is relatively displaced to an uppermost end 56b provided at an upper portion of the elongated hole 56. The uppermost end 56b of the elongated hole 56 is an operation starting position where the movable member 3 together with the headrest 2 are moved in an upward and forward direction by a movement of the cable 55. As illustrated by a double-dashed line in Fig. 8D, in a state where the second end portion 55b of the cable 55 is engaged with the elongated hole 56, the uppermost end 56b of the elongated hole 56 pulls the second end portion 55b of the cable 55 further in the downward direction. As illustrated in Fig. 4B, the first end portion 55a of the cable 55 is pulled backward and the lock link member 52 is pivoted in the counter-clockwise direction (i.e. in the direction illustrated by the arrow Q in Fig. 4B). Consequently, the hook portion 52b is released from the receiving portion 33a of the sliding member 33. The sliding member 33 is moved upward along the guiding hole 13 by means of a biasing force of the extension spring 51. Accordingly, as illustrated by a double-dashed line in Fig. 3, the movable member 3, including the sliding member 33, the sub frame 30 and the supporting bracket 31, is tilted forward while being moved upward. The headrest body 21 is tilted forward while being moved upward.

When the headrest body 21 is manually returned to an original position (i.e. a position of the headrest body 21 before an operation) after the operation, the sliding member 33 is moved toward the first end 13a of the guiding hole 13. As the sliding member 33 is moved toward the first end 13a of the guiding hole 13, the sliding member 33 contacts an inclining surface 52c provided at an upper portion of the link member 52. Thus, after the lock link member 52 is pivoted in the direction illustrated by the arrow Q in Fig. 4B, the lock link member 52 is returned to a locked position illustrated in Fig. 4A.

According to the embodiment, as illustrated in Figs. 3 and 5, when the load is applied on the link member 53 because of a deflection of the load receiving area 12 of the seat back 1, the link member 53 is pivoted and the position of the elongated hole 56 relative to the second end portion 55b of the cable 55 is displaced. A different physical size of the occupant causes a different amount of the deflection of the load receiving area 12 and therefore a different distance for pivoting the link member 53. The difference of the amount of the deflection of the load-applying portion 12, caused by the difference of the physical size of the occupant, is offset by means of the play allowance of the elongated hole 56. Therefore, the lock of the lock link member 52 is prevented from being accidentally released. Accordingly, the headrest 2 is prevented from malfunctioning.

As illustrated in Fig. 8D, in a case where the link member 53 receives a load larger than a predetermined amount when a occupant is thrust to the seat back 1 at the time of the collision, or the like, the position of the elongated hole 56 relative to the second end portion 55b of the cable 55 is displaced in the downward direction. In a state where the second end portion 55b of the cable 55 is engaged with the uppermost end 56b of the elongated hole 56, the elongated hole 56 is moved in the downward direction together with the second end portion 55b of the cable 55. Accordingly, the lock link member 52 is pivoted by means of the cable 55. The restriction of the movement of the sliding member 33 by means of the lock link member 52 is released. Therefore, the movable member 3 moves upward together with the headrest 2 by means of the biasing force of the extension spring 51.

The link member 53 is provided in the vicinity of the lower frame 10d provided at a lower portion of the seat back 1. The lower portion of the seat back 1 is a portion that receives the load of a body, such as a hip portion of the occupant, quickly at the time of the collision, or the like. Further, the lower portion of the seat back 1 is close to portions where the seat back 1 is fixed at the lower arms 72. Therefore, an amount of collision energy, decreased because of swinging movement, is small. Accordingly, the load, applied by the occupant at the time of the collision, is quickly and accurately received. The headrest 2 is surely operated at the time of the collision.

According to the embodiment, the second end portion 55b of the cable 55 is positioned at the lowermost end 56a of the elongated hole 56 of the link member 53 when the occupant is not seated. However, a length of the elongated hole 56 may be further elongated and the second end portion 55b of the cable 55 may be positioned at an intermediate position upper than the lowermost end 56a of the elongated hole 56 when the occupant is not seated.

According to the embodiment, the cable 55 functions as the operation transmitting member that transmits the operation from the link member 53 to the lock link member 52. However, the operation transmitting member is not limited to a cable and instead, another component, such as a link mechanism for example, may be used.

According to the embodiment, the first end portion 55a of the cable 55 is connected to the lock link member 52. When the cable 55 is pulled by means of the link member 53, the lock link member 52 is pivoted. Then, the hook portion 52b is released from the sliding member 33. Consequently the sliding member 33 is moved upward by means of the extension spring 51. However, modification may be made. For example, the first end portion 55a of the cable 55 may be directly connected to the sliding member 33. When the cable 55 is pulled, the extension spring 51 may not have to be used and the sliding member 33 may be pulled up directly by the cable 5.

According to the embodiment, the second end portion 55b of the cable 55 is arranged so as to have a play allowance at the elongated hole 56. However, the play allowance is not limited to be provided at the elongated hole 56. In other words, a modification can be made so that the play allowance is provided between the elongated hole 56 and the second end portion 55b of the cable 55. A seat for a vehicle includes: a seat back (1); a headrest (2); a movable member (3); a link member (53); and an operation transmitting member (55), moving the movable member (3) in an upward direction by being moved at an operation starting point (55b) thereof in accordance with the movement of the link member (53). The link member (53) includes: a pressure receiving portion (53c), moving the link member (53) when receiving a load of the occupant; and a connecting portion (56), connected to the operation transmitting member (55) so as to include a play portion relatively displaced between the connecting portion and the operation starting point (55b). The connecting portion (56) includes an operation starting position (56b) moving the movable member (3) together with the headrest (2) in the upward direction of the vehicle by moving the operation transmitting member (55) in a state where the operation starting point (55b) is engaged with the connecting portion (56), when a load more than a predetermined amount is applied.

## Claims

1. A seat for a vehicle comprising:
a seat back (1) including a seat back frame (10);
a headrest (2) provided at an upper portion of the seat back (1) and including a headrest body (21) and a stay (22);
a movable member (3) holding the stay (22) and supported by the seat back frame (10) so as to move in an upward - downward direction thereof;
a link member (53) movably supported by the seat back frame (10); and
an operation transmitting member (55) having an operation starting point (55b) engaged with the link member (53), and moving the movable member (3) in an upward direction by being moved at the operation starting point (55b) in accordance with the movement of the link member (53); wherein
the link member (53) includes a pressure receiving portion (53c), provided at a load receiving area (12) of the seat back (1) and moving the link member (53) when receiving a load of the occupant from the load receiving area (12), and a connecting portion (56) connected to the operation transmitting member (55) so as to include a play portion relatively displaced between the connecting portion and the operation starting point (55b), and wherein
the connecting portion (56) includes an operation starting position (56b) moving the movable member (3) together with the headrest (2) in the upward direction of the vehicle by moving the operation transmitting member (55) in a state where the operation starting point (55b) of the operation transmitting member (55) is engaged with the connecting portion (56), when a load more than a predetermined amount is applied.

2. The seat for the vehicle according to claim 1, wherein
the connecting portion (56) is an elongated hole (56) extending in a substantially straight line along a moving direction of the operation transmitting member (55) and the operation starting position (56b) is positioned at an uppermost position (56b) of the elongated hole (56),
when the load more than the predetermined amount is applied on the pressure receiving portion (53c), the operation starting point (55b) is positioned at a position lower than the uppermost position (56b) of the elongated hole (56), and
when the load more than the predetermined amount is applied on the pressure receiving portion (53c), the link member (53) moves the operation transmitting member (55) in a downward direction in a state where the operation starting point (55b) is engaged with the uppermost position (56b) of the elongated hole (56).

3. The seat for the vehicle according to any one of claims 1 and 2, wherein
the link member (53) is provided at a lower portion of the seat back (1) relative to an intermediate portion thereof in a height direction thereof.
